(19) **Europäisches Patentamt**
**European Patent Office**
**Office européen des brevets**

(11) **EP 3 611 039 B1**

(12) **EUROPEAN PATENT SPECIFICATION**

(45) Date of publication and mention
of the grant of the patent:
**27.01.2021 Bulletin 2021/04**

(51) Int Cl.:
***B60C 11/12*** *(2006.01)*      ***B60C 11/03*** *(2006.01)*

(21) Application number: **19191617.0**

(22) Date of filing: **14.08.2019**

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.08.2018   JP 2018153647**

(43) Date of publication of application:
**19.02.2020   Bulletin 2020/08**

(73) Proprietor: **Sumitomo Rubber Industries, Ltd.**
**Kobe-shi,**
**Hyogo-ken 651-0072 (JP)**

(72) Inventors:
• **HAGIHARA, Takashi**
**Kobe-shi, Hyogo-ken 651-0072 (JP)**

• **AMEMIYA, Taiichiro**
**Kobe-shi, Hyogo-ken 651-0072 (JP)**
• **OSAWA, Takuya**
**Kobe-shi, Hyogo-ken 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 219 512      EP-A2- 2 781 374**
**JP-A- 2016 199 118      JP-A- 2017 056 814**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a tire having enhanced braking performance.

Description of the Background Art

In a tire including a tread portion that is divided by a plurality of circumferential main grooves into a plurality of land portions including shoulder land portions, providing each shoulder land portion with lateral grooves and sipes extending in the tire axial direction in order to enhance braking performance has been known (see, for example, Japanese Laid-Open Patent Publication No. 2017-71373). Another exemplary tire representing the state of the art is disclosed in JP 2017 056814 A.

During braking, front-rear force due to deformation of a tread surface and frictional force due to catching between a road surface and the tread surface (edge effect) are generated in the tire. As the number of grooves in the direction perpendicular to the tire circumferential direction in the tread surface that is in contact with the road surface increases, an edge component increases, the frictional force with the road surface increases, and thus the braking distance becomes shorter.

By increasing the number of lateral grooves and sipes, the edge effect is increased, but the tread stiffness decreases accordingly. In addition, the front-rear force generated in the tire during braking is represented by the product of a displacement of the tread and the tread stiffness. Therefore, an increase in the number of lateral grooves and sipes increases the edge effect but has a problem of causing a decrease in front-rear force. Because of this, in order to improve braking performance, it is necessary to improve the stiffness of the tread while maintaining the edge effect.

SUMMARY OF THE INVENTION

An object of the present invention is to provide a tire that can have braking performance enhanced by improving tread stiffness while maintaining an edge effect.

The present invention is directed to a tire including a tread portion divided, by a plurality of circumferential main grooves including a pair of shoulder main grooves, into a plurality of land portions including a pair of shoulder land portions at an outer side in a tire axial direction with respect to the respective shoulder main grooves, wherein a first shoulder land portion that is one of the pair of shoulder land portions has:

a plurality of first shoulder lateral grooves each extending inward in the tire axial direction from the outer side in the tire axial direction with respect to a ground-contact edge and having an inner end portion that terminates within the first shoulder land portion without being connected to the shoulder main groove via a sipe; and
first shoulder sipes each provided between the first shoulder lateral grooves that are adjacent to each other in a tire circumferential direction.

In the tire according to the present invention, each first shoulder lateral groove has a two-stage structure having a shallow groove portion located at an inner side in the tire axial direction and a deep groove portion that is located at the outer side in the tire axial direction and that is connected to the shallow groove portion via a step portion

In the tire according to the present invention, the groove depth of the shallow groove portion gradually increases from the inner end portion toward the outer side in the tire axial direction, and has a maximum depth at a point of intersection of the shallow groove portion and the step portion, wherein further the groove depth of the deep groove portion gradually decreases from a point of intersection of the deep groove portion and the step portion toward the outer side in the tire axial direction, and has a maximum depth at the point of intersection, and wherein the maximum depth of the shallow groove portion of the first shoulder lateral groove is 55 % to 65 % of the maximum depth of the deep groove portion of the first shoulder lateral groove.

In the tire according to the present invention, a maximum depth Ha1 of the shallow groove portion of the first shoulder lateral groove is preferably substantially equal to a maximum depth Hb1 of the first shoulder sipe.

In the tire according to the present invention, preferably, an inner end portion of each first shoulder sipe terminates within the first shoulder land portion, and
a distance La1 in the tire axial direction from the shoulder main groove to the inner end portion of the first shoulder lateral groove is substantially equal to a distance Lb1 in the tire axial direction from the shoulder main groove to the inner end portion of the first shoulder sipe.

Preferably, in the tire according to the present invention, how the tire is to be oriented when mounted to a vehicle is specified,
when the tire is mounted on the vehicle, the first shoulder land portion is located at an outer side of the vehicle, and a second shoulder land portion that is the other shoulder land portion is located at an inner side of the vehicle, and the second shoulder land portion has:

> a plurality of second shoulder lateral grooves each extending inward in the tire axial direction from the outer side in the tire axial direction with respect to a ground-contact edge and having an inner end portion connected to the shoulder main groove via a sipe; and
> second shoulder sipes each provided between the second shoulder lateral grooves that are adjacent to each other in the tire circumferential direction.

In the tire according to the present invention, each second shoulder lateral groove preferably has a two-stage structure having a shallow groove portion located at the inner side in the tire axial direction and a deep groove portion that is located at the outer side in the tire axial direction and that is connected to the shallow groove portion via a step portion.

In the tire according to the present invention, a maximum depth Ha2 of the shallow groove portion of the second shoulder lateral groove is preferably substantially equal to a maximum depth Hb2 of the second shoulder sipe.

In the tire according to the present invention, preferably, an inner end portion of each second shoulder sipe terminates within the second shoulder land portion, and
a distance La2 in the tire axial direction from the shoulder main groove to the inner end portion of the second shoulder lateral groove is substantially equal to a distance Lb2 in the tire axial direction from the shoulder main groove to the inner end portion of the second shoulder sipe.

In the tire according to the present invention, the maximum depth Ha2 of the shallow groove portion of the second shoulder lateral groove is preferably larger than the maximum depth Ha1 of the shallow groove portion of the first shoulder lateral groove.

In the tire according to the present invention, the distance La2 from the shoulder main groove to the inner end portion of the second shoulder lateral groove is preferably smaller than the distance La1 in the tire axial direction from the shoulder main groove to the inner end portion of the first shoulder lateral groove.

In the tire according to the present invention, preferably, the plurality of land portions include a first middle land portion adjacent to the first shoulder land portion via the shoulder main groove, and
the first middle land portion has outer middle sipes each extending from an outer edge in the tire axial direction of the first middle land portion and terminating within the first middle land portion, and inner middle sipes each extending from an inner edge in the tire axial direction of the first middle land portion and terminating within the first middle land portion.

In the tire according to the present invention, preferably, a maximum depth Hc1 of each outer middle sipe is smaller than the maximum depth Ha1 of the shallow groove portion of the first shoulder lateral groove, and
a maximum depth Hd1 of each inner middle sipe is larger than the maximum depth Ha1 of the shallow groove portion of the first shoulder lateral groove.

In the present invention, the first shoulder land portion has a plurality of first shoulder lateral grooves and first shoulder sipes each provided between the first shoulder lateral grooves. An inner end portion of each first shoulder lateral groove terminates within the first shoulder land portion without being connected to the shoulder main groove via a sipe.

Accordingly, while an edge effect of a tread surface is maintained, the land portion stiffness of the first shoulder land portion is improved. As a result, front-rear force during braking increases, so that braking performance can be improved.

BRIEF DESCRIPTION OF THE DRAWINGS

> FIG. 1 is a development of a tread portion of a tire according to an embodiment of the present invention;
> FIG. 2(A) is a cross-sectional view taken along the longitudinal direction of a first shoulder lateral groove;
> FIG. 2(B) is a cross-sectional view taken along the longitudinal direction of a first shoulder sipe;
> FIG. 3(A) is a cross-sectional view taken along the longitudinal direction of inner and outer middle sipes in a first middle land portion;
> FIG. 3(B) is a cross-sectional view taken along the longitudinal direction of inner and outer middle sipes in a second middle land portion;
> FIG. 4(A) is a cross-sectional view taken along the longitudinal direction of a second shoulder lateral groove;

FIG. 4(B) is a cross-sectional view taken along the longitudinal direction of a second shoulder sipe;

FIG. 5 is an explanatory diagram showing a turning movement of a four-wheeled passenger car;

FIG. 6 is a graph showing a relationship between bench CP of a general pneumatic radial tire and a load applied thereto; and

FIG. 7 is an explanatory diagram shoeing a ground-contact surface of a tire at a front wheel during turning of a vehicle.

DESCRIPTION OF THE PREFERRED EMBODIMENTS

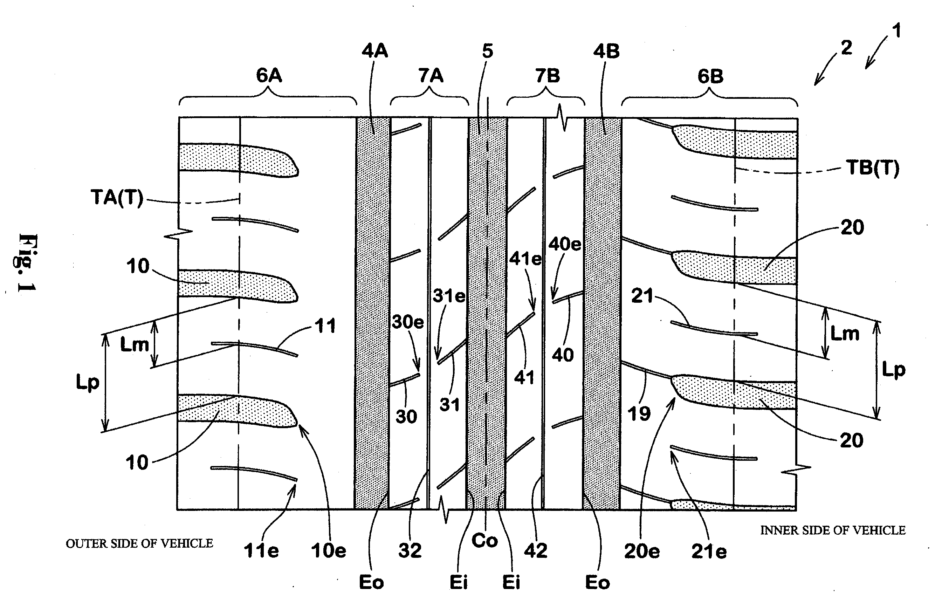

Hereinafter, embodiments of the present invention will be described in detail. FIG. 1 is a development of a tread portion 2 of a tire 1 according to an embodiment of the present invention. In this example, the case where the tire 1 is a pneumatic tire for a passenger car is shown. However, the tire 1 may be, for example, a pneumatic tire for a heavy-load vehicle or the like, or further may be formed as each of various tires such as a non-pneumatic tire, the interior of which is not filled with pressurized air (for example, an air-less tire).

As shown in FIG. 1, the tread portion 2 has an asymmetric tread pattern by which how the tire 1 is to be oriented when mounted to a vehicle is specified. A first ground-contact edge TA located at the left side in FIG. 1 is located at the outer side of the vehicle when the tire 1 is mounted on the vehicle, and a second ground-contact edge TB located at the right side in FIG. 1 is located at the inner side of the vehicle when the tire 1 is mounted on the vehicle. It should be noted that the present invention is not limited to such an example, and can also be applied to, for example, a tire for which how the tire is to be oriented when mounted to a vehicle is not limited.

In the case of a pneumatic tire, the first and second ground-contact edges TA and TB (referred to as a ground-contact edge T when collectively referred to) means the positions of the outermost ends in the tire axial direction of a ground-contact surface that comes into contact with the ground when a normal load is applied to the tire in a state where the tire is mounted to a normal rim and inflated to a normal pressure.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard. The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. The "normal load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

A plurality of circumferential main grooves continuously extending in the tire circumferential direction are provided on the tread portion 2. The plurality of circumferential main grooves include a shoulder main groove 4A provided at the first ground-contact edge TA side (the outer side of the vehicle) and a shoulder main groove 4B provided at the second ground-contact edge TB side (the inner side of the vehicle). The plurality of circumferential main grooves in this example include the shoulder main grooves 4A and 4B and one crown main groove 5 provided therebetween. A plurality of crown main grooves 5 whose number is two or greater may be provided.

In the tread portion 2, a plurality of land portions demarcated by the plurality of circumferential main grooves are provided. The plurality of land portions include a first shoulder land portion 6A located at the outer side in the tire axial direction with respect to the shoulder main groove 4A, and a second shoulder land portion 6B located at the outer side in the tire axial direction with respect to the shoulder main groove 4B. The plurality of land portions in this example include the first and second shoulder land portions 6A and 6B, a first middle land portion 7A between the shoulder main groove 4A and the crown main groove 5, and a second middle land portion 7B between the shoulder main groove 4B and the crown main groove 5.

One of the first and second shoulder land portions 6A and 6B, the first shoulder land portion 6A provided at the outer side of the vehicle in this example, has a plurality of first shoulder lateral grooves 10 provided at intervals in the tire circumferential direction, and first shoulder sipes 11 each provided between the first shoulder lateral grooves 10, 10 that are adjacent to each other in the tire circumferential direction.

Each first shoulder lateral groove 10 extends inward in the tire axial direction from the outer side in the tire axial direction with respect to the first ground-contact edge TA. An inner end portion 10e of the first shoulder lateral groove 10 terminates within the first shoulder land portion 6A without being connected to the shoulder main groove 4A via a sipe.

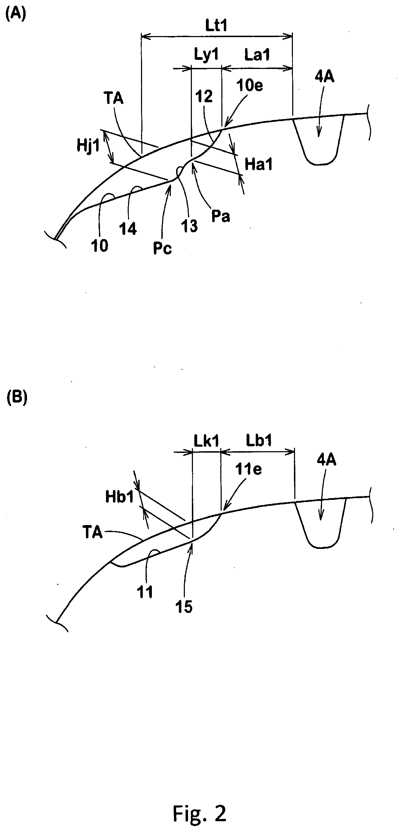

As shown in FIG. 2(A), the first shoulder lateral groove 10 has a two-stage structure having a shallow groove portion 12 located at the inner side in the tire axial direction, and a deep groove portion 14 that is located at the outer side in the tire axial direction and that is connected to the shallow groove portion 12 via a step portion 13.

In this example, the groove depth of the shallow groove portion 12 gradually increases from the inner end portion 10e toward the outer side in the tire axial direction, and has a maximum depth Ha1 at a point of intersection Pa

of the shallow groove portion 12 and the step portion 13. In addition, in this example, the groove depth of the deep groove portion 14 gradually decreases from a point of intersection Pc of the deep groove portion 14 and the step portion 13 toward the outer side in the tire axial direction. Therefore, the deep groove portion 14 has a maximum depth Hj 1 at the point of intersection Pc of the deep groove portion 14 and the step portion 13.

The maximum depth Ha1 of the shallow groove portion 12 is preferably within the range of 55% to 65% of the maximum depth Hj1 of the deep groove portion 14. In addition, a length Ly1 in the tire axial direction of the shallow groove portion 12 is preferably within the range of the 50% to 60% of a distance La1 in the tire axial direction from the shoulder main groove 4A to the inner end portion 10e of the first shoulder lateral groove 10. Moreover, the distance La1 is preferably within the range of 40% to 50% of a distance Lt1 in the tire axial direction from the shoulder main groove 4A to the first ground-contact edge TA.

As shown in FIG. 1, one first shoulder sipe 11 is provided between the first shoulder lateral grooves 10, 10 that are adjacent to each other in the tire circumferential direction. The first shoulder sipe 11 also extends inward in the tire axial direction from the outer side in the tire axial direction with respect to the first ground-contact edge TA, and an inner end portion 11e thereof terminates within the first shoulder land portion 6A.

As shown in FIG. 2(B), the first shoulder sipe 11 has a maximum depth portion 15, and the sipe depth thereof gradually decreases from the maximum depth portion 15 toward the inner side and the outer side in the tire axial direction. A maximum depth Hb1 which is the sipe depth at the maximum depth portion 15 is preferably substantially equal to the maximum depth Ha1 (shown in FIG. 2(A)) of the shallow groove portion 12 of the first shoulder lateral groove 10. The term "substantially equal" means that a depth ratio Hb1/Ha1 is within the range of 0.95 to 1.05.

A distance Lb1 in the tire axial direction from the shoulder main groove 4A to the inner end portion 11e of the first shoulder sipe 11 is preferably substantially equal to the distance La1 (shown in FIG. 2(A)) in the tire axial direction from the shoulder main groove 4A to the inner end portion 10e of the first shoulder lateral groove 10. The term "substantially equal" means that a distance ratio Lb1/La1 is within the range of 0.95 to 1.05.

In particular, a distance Lk1 in the tire axial direction from the inner end portion 11e of the first shoulder sipe 11 to the maximum depth portion 15 is preferably substantially equal to the length Ly1 (shown in FIG. 2(A)) in the tire axial direction of the shallow groove portion 12 of the first shoulder lateral groove 10. The term "substantially equal" means that a distance ratio Lk1/Ly1 is within the range of 0.95 to 1.05.

As described above, in the first shoulder land portion 6A, the inner end portion 10e of the first shoulder lateral groove 10 terminates within the first shoulder land portion 6A without being connected to the shoulder main groove 4A via a sipe. That is, while an edge effect is sacrificed from the inner end portion 10e to the shoulder main groove 4A, the land portion stiffness is enhanced to improve front-rear force. In addition, while the land portion stiffness is maintained high, the edge effect can be compensated by the first shoulder sipe 11, so that braking performance can be improved as a whole.

In particular, since the first shoulder lateral groove 10 has a two-stage structure, the land portion stiffness of the first shoulder land portion 6A can be effectively enhanced while the edge effect is maintained, as compared to the case of a lateral groove having the same groove volume and having a single-stage structure with no step.

In this case, if the maximum depth Ha1 of the shallow groove portion 12 is out of the range of 55 to 65% of the maximum depth Hj 1 of the deep groove portion 14, the above effect of the two-stage structure is not sufficiently exhibited, so that it is difficult to sufficiently increase the land portion stiffness. In addition, if the length Ly1 of the shallow groove portion 12 is out of the range of 50% to 60% of the distance La1 in the tire axial direction from the shoulder main groove 4A to the inner end portion 10e of the first shoulder lateral groove 10, the above effect of the two-stage structure is not sufficiently exhibited, so that it is difficult to sufficiently increase the land portion stiffness. Therefore, the ratio Ha1/Rj1 is preferably within the range of 55 to 65%. In addition, the ratio Ly1/La1 is preferably within the range of 50% to 60%.

If the distance La1 in the tire axial direction from the inner end portion 10e of the first shoulder lateral groove 10 to the shoulder main groove 4A is greater than 50% of the distance Lt1 in the tire axial direction from the shoulder main groove 4A to the first ground-contact edge TA, the land portion stiffness is excessively high, so that contact performance with a road surface deteriorates. As a result, the frictional force decreases, so that the braking performance tends to decrease. On the other hand, if the distance La1 is less than 40% of the distance Lt1, the land portion stiffness is excessively low, and thus sufficient front-rear force is not generated. As a result, the braking performance tends to decrease. Therefore, the ratio La1/Lt1 is preferably within the range of 40% to 50%.

Moreover, when the maximum depth Ha1 of the shallow groove portion 12 and the maximum depth Hb1 of the first shoulder sipe 11 are substantially equal to each other, and when the distance La1 in the tire axial direction to the inner end portion 10e of the first shoulder lateral groove 10 and the distance Lb1 in the tire axial direction to the inner end portion 11e of the first shoulder sipe 11 are substantially equal to each other, displacement of the tread surface during braking can be made uniform. Thus, contact performance with a road surface improves, so that the braking performance can be enhanced.

As shown in FIG. 1, the first shoulder sipe 11 is preferably provided at substantially the center between the first shoulder lateral grooves 10, 10 that are adjacent to each other in the tire circumferential direction. Specifically, a distance Lm in the tire circumferential direction between the first shoulder sipe 11 and the first shoulder lateral groove 10 that is adjacent thereto at one side in the tire circumferential direction is preferably within the range of 45% to 55% of a distance Lp in the tire circumferential direction between the first shoulder lateral grooves 10, 10 adjacent to the first shoulder sipe 11 at both sides. Accordingly, displacement of the tread surface during braking can be made uniform, and thus contact performance with a road surface improves, so that the braking performance can be enhanced.

In this example, the second shoulder land portion 6B has a plurality of second shoulder lateral grooves 20 provided at intervals in the tire circumferential direction, and second shoulder sipes 21 each provided between the second shoulder lateral grooves 20, 20 that are adjacent to each other in the tire circumferential direction.

Each second shoulder lateral groove 20 extends inward in the tire axial direction from the outer side in the tire axial direction with respect to the second ground-contact edge TB. An inner end portion 20e of the second shoulder lateral groove 20 is connected to the shoulder main groove 4B via a sipe 19.

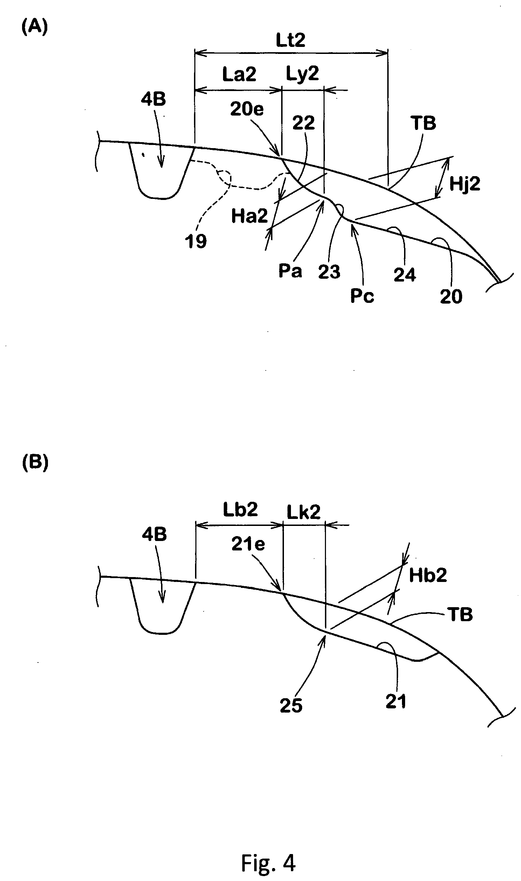

As shown in FIG. 4(A), similar to the first shoulder lateral groove 10, the second shoulder lateral groove 20 has a two-stage structure having a shallow groove portion 22 located at the inner side in the tire axial direction, and a deep groove portion 24 that is located at the outer side in the tire axial direction and that is connected to the shallow groove portion 22 via a step portion 23.

In this example, the groove depth of the shallow groove portion 22 gradually increases from the inner end portion 20e toward the outer side in the tire axial direction, and has a maximum depth Ha2 at a point of intersection Pa of the shallow groove portion 22 and the step portion 23. In addition, in this example, the groove depth of the deep groove portion 24 gradually decreases from a point of intersection Pc of the deep groove portion 24 and the step portion 23 toward the outer side in the tire axial direction. Therefore, the deep groove portion 24 has a maximum depth Hj2 at the point of intersection Pc of the deep groove portion 24 and the step portion 23.

The maximum depth Ha2 of the shallow groove portion 22 is preferably within the range of 55% to 65% of the maximum depth Hj2 of the deep groove portion 24. In addition, a length Ly2 in the tire axial direction of the shallow groove portion 22 is preferably within the range of 50% to 60% of a distance La2 in the tire axial direction from the shoulder main groove 4B to the inner end portion 20e of the second shoulder lateral groove 20. Moreover, the distance La2 is preferably within the range of 40% to 50% of a distance Lt2 in the tire axial direction from the shoulder main groove 4B to the second ground-contact edge TB.

As shown in FIG. 1, one second shoulder sipe 21 is provided between the second shoulder lateral grooves 20, 20 that are adjacent to each other in the tire circumferential direction. The second shoulder sipe 21 also extends inward in the tire axial direction from the outer side in the tire axial direction with respect to the second ground-contact edge TB, and an inner end portion 21e thereof terminates within the second shoulder land portion 6B.

The second shoulder sipe 21 is preferably provided at substantially the center between the second shoulder lateral grooves 20, 20 that are adjacent to each other in the tire circumferential direction. Specifically, a distance Lm in the tire circumferential direction between the second shoulder sipe 21 and the second shoulder lateral groove 20 that is adjacent thereto at one side in the tire circumferential direction is preferably within the range of 45% to 55% of a distance Lp in the tire circumferential direction between the second shoulder lateral grooves 20, 20 that are adjacent to the second shoulder sipe 21 at both sides. Accordingly, displacement of the tread surface during braking can be made uniform, and thus contact performance with a road surface improves, so that the braking performance can be enhanced.

As shown in FIG. 4(B), the second shoulder sipe 21 has a maximum depth portion 25, and the sipe depth thereof gradually decreases from the maximum depth portion 25 toward the inner side and the outer side in the tire axial direction. A maximum depth Hb2 which is the sipe depth at the maximum depth portion 25 is preferably substantially equal to the maximum depth Ha2 at the shallow groove portion 22 of the second shoulder lateral groove 20. The term "substantially equal" means that a depth ratio Hb2/Ha2 is within the range of 0.95 to 1.05.

A distance Lb2 in the tire axial direction from the shoulder main groove 4B to the inner end portion 21e of the second shoulder sipe 21 is preferably substantially equal to the distance La2 in the tire axial direction from the shoulder main groove 4B to the inner end portion 20e of the second shoulder lateral groove 20. The term "substantially equal" means that a distance ratio Lb2/La2 is within the range of 0.95 to 1.05.

In particular, a distance Lk2 in the tire axial direction from the inner end portion 21e to the maximum depth portion 25 in the second shoulder sipe 21 is preferably substantially equal to the length Ly2 in the tire axial direction of the shallow groove portion 22 of the second shoulder lateral groove 20. The term "substantially equal" means that a distance ratio Lk2/Ly2 is within the range of 0.95 to 1.05.

By such a configuration, similar to the first shoulder land portion 6A, in the second shoulder land portion 6B, while the edge effect of the tread surface is maintained, the land portion stiffness is improved, and front-rear force during braking is increased, so that the braking performance can be improved. In the second shoulder land portion 6B, the inner end portion 20e of the second shoulder lateral groove 20 is connected to the shoulder main groove 4B via the sipe 19. Thus, the land portion stiffness is set to be lower than that of the first shoulder land portion 6A.

In this example, the maximum depth Ha2 of the shallow groove portion 22 of the second shoulder lateral groove 20 is preferably larger than the maximum depth Ha1 of the shallow groove portion 12 of the first shoulder lateral groove 10. In this case, a maximum depth ratio Ha2/Ha1 is preferably within the range of 105% to 115%. In addition, the distance La2 in the tire axial direction to the inner end portion 20e of the second shoulder lateral groove 20 is preferably smaller than the distance La1 in the tire axial direction to the inner end portion 10e of the first shoulder lateral groove 10. In this case, a distance ratio La2/La1 is preferably 0.85 to 0.95. Also by such a configuration, the land portion stiffness of the second shoulder land portion 6B is set to be lower than the land portion stiffness of the first shoulder land portion 6A.

As a result of studies by the present inventors, it has been found that the steering stability of a vehicle, in particular, turning performance of the vehicle, improves in the case of the tire 1 in which a stiffness difference is provided between the first shoulder land portion 6A at the outer side of the vehicle and the second shoulder land portion 6B at the inner side of the vehicle such that the land portion stiffness of the first shoulder land portion 6A is higher than the land portion stiffness of the second shoulder land portion 6B. This finding will be described below.

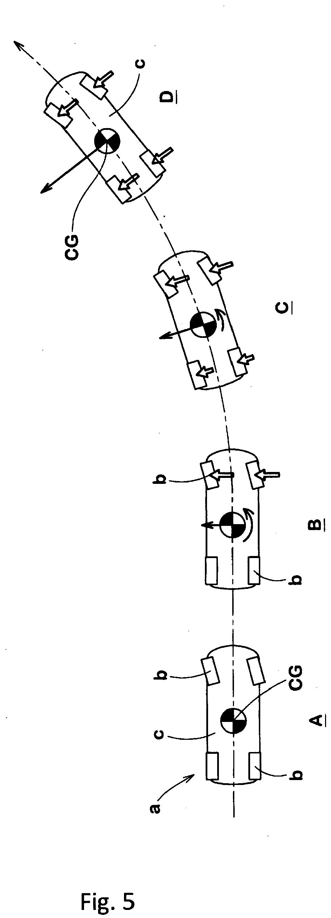

FIG. 5 shows a time-series change of a turning movement of a general four-wheeled vehicle having a steering mechanism at front wheels. First, when a steering wheel is operated by a driver during straight running as in a state A, a slip angle is provided to a tire b at each front wheel, and the tire b at each front wheel generates cornering force (state B). Here, the "slip angle" is an angle formed by the travelling direction of a vehicle body c and the tire b. In addition, the "cornering force" is a component of force applied in the lateral direction with respect to the travelling direction, of frictional force generated at the ground-contact surface of each tire b when the four-wheeled vehicle a makes a turn. In particular, cornering force generated when the slip angle is one degree is referred to as cornering power.

The cornering force generated by the tire b at each front wheel causes a turning motion of the vehicle body c with yaw. The turning motion provides a slip angle to a tire b at each rear wheel, and thus the tire b at each rear wheel also generates cornering force (state C). Then, when a moment based on cornering force of the tires b at the front wheels and a moment based on the cornering force of the tires b at the rear wheels are substantially balanced with each other about the center of gravity CG of the vehicle (state D), the vehicle body c comes into a stationary state in which yaw acceleration is almost zero and the vehicle body c diagonally moves (hereinafter, such a running state is sometimes referred to as "revolution running state").

The inventors have conducted various studies on tires based on the recognition that, in order to improve turning performance of a four-wheeled vehicle, it is important to shift a vehicle body to a revolution running state as quickly as possible after steering for turning.

Generally, in a state where tires are mounted on a vehicle, cornering power generated by each tire is referred to as equivalent cornering power (hereinafter, "equivalent CP"). The equivalent CP has a relationship of the following equation (A) with cornering power of a tire alone measured in a bench test or the like (hereinafter, referred to as "bench CP").

$$\text{Equivalent CP} = \text{bench CP} \times \text{CP amplification factor} \qquad (A)$$

The equivalent CP is cornering power including the influence of so-called roll steer, compliance steer, or the like, and is cornering power in the case where it is assumed that roll characteristics and suspension characteristics of the vehicle are incorporated into the tires. These characteristics are represented by the CP amplification factor.

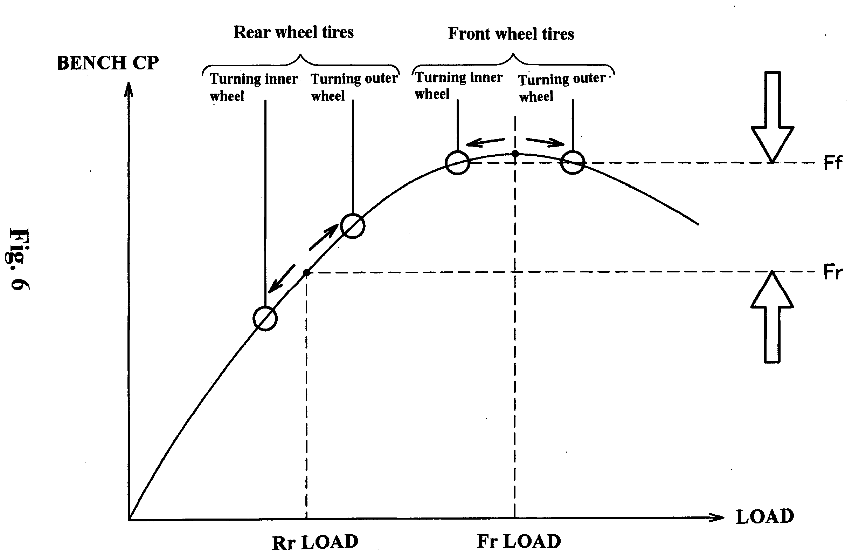

FIG. 6 is a graph showing a relationship between the bench CP of a general pneumatic radial tire and a load applied thereto. Normally, it is found that, with increase of the load, the bench CP increases, reaches a peak, and then gradually decreases. In addition, in this graph, rough load ranges of tires mounted on a front-wheel-drive four-wheeled vehicle during turning are also shown. First, in the front-wheel-drive four-wheeled vehicle, a greater load tends to be applied to front wheel tires than to rear wheel tires. In addition, at the front wheels and the rear wheels, respectively, a greater load tends to be applied to the tire at the outer side of turning than to the tire at the inner side of turning. Thus, regarding average values Ff and Fr of bench CP generated during turning, a relatively great difference is produced between the tires at the front wheel side and the tires at the rear wheel side.

In the case where the above-described load distribution to each tire is assumed, it is considered that, in order to shift a vehicle to a revolution running state as quickly as possible during turning movement of the vehicle to improve turning performance, it is effective to relatively decrease the equivalent CP of tires at the front wheels and relatively increase the equivalent CP of tires at the rear wheels, that is, make the equivalent CP of both tires close to each other.

In order to relatively decrease the equivalent CP at the front wheels, the inventors have focused on self-aligning torque (hereinafter, sometimes simply referred to as "SAT"), to which much attention has not been paid so far.

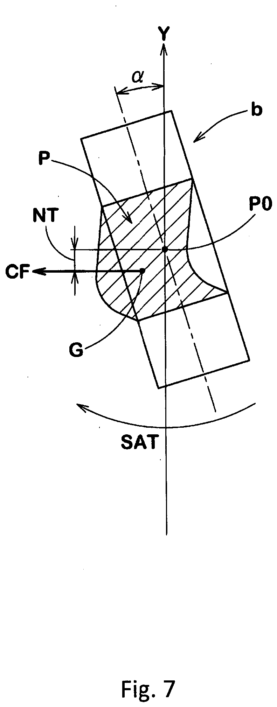

Here, SAT will be described briefly. FIG. 7 shows a view of a ground-contact surface of a tire b during turning at a slip angle $\alpha$ with respect to a travelling direction Y, as seen from the road surface side. As shown in FIG. 7, a tread rubber in a ground-contact surface P elastically deforms, and CF in the lateral direction is generated. When a CF action point G (corresponding to the center of a hatched ground-contact surface) is located rearward of a contact center point P0 of the tire, SAT that is a moment in a direction that decreases the slip angle $\alpha$ acts on a portion of the tire around the contact center point P0. That is, the SAT acts on the portion of the tire around the contact center point P0 in the direction that decreases the slip angle. A distance NT along the travelling direction Y between the contact center point P0 and the CF action point G is defined as a pneumatic trail.

As a result of an experiment by the inventors, it has been found that the CP amplification factor in the above equation (A) is almost proportional to the reciprocal of SAT. Thus, regarding a tire having great SAT, the equivalent CP relatively decreases at each front wheel. On the other hand, at each rear wheel, a steering mechanism is not provided, and there is no influence of SAT, so that a decrease in equivalent CP is inhibited. As a result, it is possible to make the equivalent CP of each front wheel tire and each rear wheel tire close to each other.

In the case where a stiffness difference is provided between the first shoulder land portion 6A at the outer side of the vehicle and the second shoulder land portion 6B at the inner side of the vehicle such that the stiffness of the first shoulder land portion 6A is higher than the stiffness of the second shoulder land portion 6B as in this example, SAT can be increased, so that it is possible to shift the vehicle to a revolution running state early during turning.

In this example, as shown in FIG. 1, the plurality of land portions include the first middle land portion 7A adjacent to the first shoulder land portion 6A via the shoulder main groove 4A, and the second middle land portion 7B adjacent to the second shoulder land portion 6B via the shoulder main groove 4B.

On the first middle land portion 7A, outer middle sipes 30 and inner middle sipes 31 are provided. In this example, each outer middle sipe 30 and each inner middle sipe 31 are provided so as to extend on the same line.

The outer middle sipe 30 extends inward in the tire axial direction from an outer edge Eo in the tire axial direction of the first middle land portion 7A, and an inner end portion 30e thereof terminates within the first middle land portion 7A. In addition, the inner middle sipe 31 extends outward in the tire axial direction from an inner edge Ei in the tire axial direction of the first middle land portion 7A, and an outer end portion 31e thereof terminates within the first middle land portion 7A.

In this example, on the first middle land portion 7A, a longitudinal middle sipe 32 is further provided so as to continuously extend in the tire circumferential direction while passing between the inner end portions 30e and the outer end portions 31e.

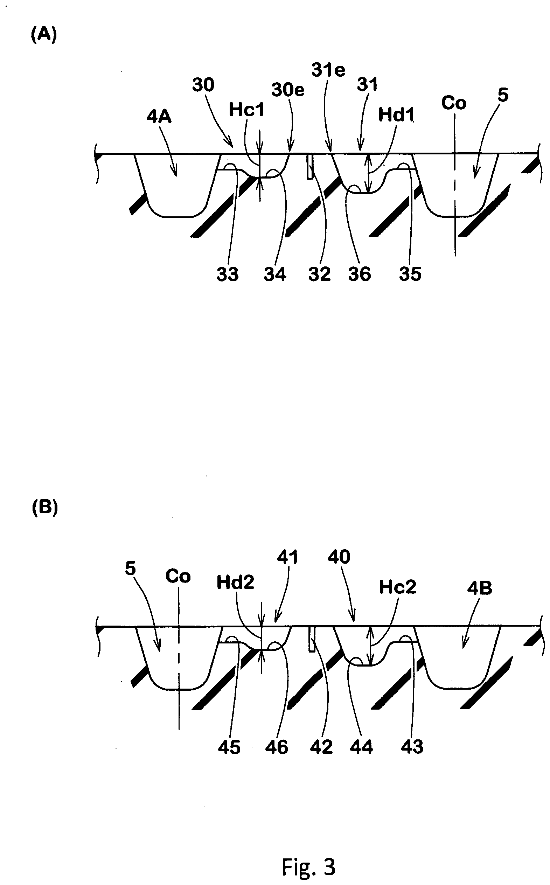

As shown in FIG. 3(A), each outer middle sipe 30 in this example has a two-stage structure having a shallow groove portion 33 located at the outer side in the tire axial direction and a deep groove portion 34 located at the inner side in the tire axial direction. In addition, each inner middle sipe 31 in this example has a two-stage structure having a shallow groove portion 35 located at the inner side in the tire axial direction and a deep groove portion 36 located at the outer side in the tire axial direction.

A maximum depth Hc1 of the outer middle sipe 30 which is the depth of the deep groove portion 34 is smaller than the maximum depth Ha1 of the shallow groove portion 12 of the first shoulder lateral groove 10. On the other hand, a maximum depth Hd1 of the inner middle sipe 31 which is the depth of the deep groove portion 36 is larger than the maximum depth Ha1. That is, in the first middle land portion 7A, the stiffness of a land portion at the outer side of the vehicle is set to be higher than the stiffness of a land portion at the inner side of the vehicle, and a stiffness difference is provided between both land portions. Accordingly, the SAT of the tire 1 can be further increased, so that it is possible to further improve the turning performance.

Also, on the second middle land portion 7B, outer middle sipes 40 and inner middle sipes 41 are provided. In this example, each outer middle sipe 40 and each inner middle sipe 41 are provided so as to extend on the same line.

The outer middle sipe 40 extends inward in the tire axial direction from an outer edge Eo in the tire axial direction of the second middle land portion 7B, and an inner end portion 40e thereof terminates within the second middle land portion 7B. In addition, the inner middle sipe 41 extends outward in the tire axial direction from an inner edge Ei in the tire axial direction of the second middle land portion 7B, and an outer end portion 41e thereof terminates within the second middle land portion 7B.

In this example, on the second middle land portion 7B, a longitudinal middle sipe 42 is further provided so as to continuously extend in the tire circumferential direction while passing between the inner end portions 40e and the outer end portions 41e.

As shown in FIG. 3(B), each outer middle sipe 40 in this example has a two-stage structure having a shallow groove portion 43 located at the outer side in the tire axial direction and a deep groove portion 44 located at the inner side in the tire axial direction. In addition, each inner middle sipe 41 in this example has a two-stage structure having a shallow groove portion 45 located at the inner side in the tire axial direction and a deep groove portion 46 located at the outer side in the tire axial direction.

A maximum depth Hc2 of the outer middle sipe 40 which is the depth of the deep groove portion 44 is larger than the maximum depth Ha1 of the shallow groove portion 12 of the first shoulder lateral groove 10. On the other hand, a maximum depth Hd2 of the inner middle sipe 41 which is the depth of the deep groove portion 46 is smaller than the maximum depth Ha1. That is, also in the second middle land portion 7B, the stiffness of a land portion at the outer side of the vehicle is set to be higher than the stiffness of a land portion at the inner side of the vehicle, and a stiffness difference is provided between both land portions. Accordingly, the SAT of the tire 1 can be further increased, so that it is possible to further improve the turning performance.

EXAMPLES

Pneumatic tires (size: 195/55R16) having the basic pattern in FIG. 1 were produced as sample tires on the basis of specifications in Table 1. Each tire was tested for braking performance and steering stability performance.

(i) When the groove bottom shapes of the first and second shoulder lateral grooves are each a two-stage structure in Table 1, the following is satisfied:

Maximum depth Ha1 of shallow groove portion/maximum depth Hj 1 of deep groove portion = 0.6; and
Maximum depth Ha2 of shallow groove portion/maximum depth Hj2 of deep groove portion = 0.6.

(ii) In Table 1, the distance La from the shoulder main groove to the inner end portion of the first shoulder lateral groove is 50% of the distance Lt1 from the shoulder main groove to the ground-contact edge.

(1) Braking performance:

The sample tires were mounted to all the wheels of a vehicle (a front-wheel-drive vehicle having an engine displacement of 1500 cc) under the conditions of rims ($16 \times 6.5$J) and internal pressure (230 kPa). Then, braking performance achieved when the vehicle ran on a test course having a dry asphalt road surface was evaluated through sensory evaluation by a driver as an index with the result of Comparative Example 1 being regarded as 100. The greater the value is, the better the result is.

(2) Steering stability performance:

Steering stability performance achieved when the above vehicle ran on a test course having a dry asphalt road surface was evaluated through sensory evaluation by a driver as an index with the result of Comparative Example 1 being regarded as 100. The greater the value is, the better the result is.

[Table 1]

| | Comparative Example 1 | Example 1 | Example 2 | Example 3 | Example 4 | Example 5 |
|---|---|---|---|---|---|---|
| <First shoulder lateral groove (outer side of vehicle)> | Presence | | | | | |
| • Groove bottom shape | One-stage | Two-stage | One-stage | Two-stage | | |
| • State of inner end portion | Communication *1 | Termination *2 | | | | |
| <First shoulder sipe> | Presence | | | | | |
| • State of inner end portion | Termination *2 | | | | | |
| • Ratio Ha1/Hb1 | 1 | | | 0.8 | | |
| • Ratio La1/Lb1 | 1 | | | | 0.8 | 1 |
| <Second shoulder lateral groove (inner side of vehicle)> | Presence | | | | | |
| • Groove bottom shape | One-stage | Two-stage | One-stage | Two-stage | | |
| • State of inner end portion | Communication *1 | Termination *3 | | | | |
| <First shoulder sipe> | Presence | | | | | |
| • State of inner end portion | Termination *2 | | | | | |

(continued)

| | Comparative Example 1 | Example 1 | Example 2 | Example 3 | Example 4 | Example 5 |
|---|---|---|---|---|---|---|
| • Ratio Ha2/Hb2 | 1 | | | 0.8 | 1 | |
| • Ratio La2/Lb2 | 1 | | | | 0.8 | 1 |
| • Ratio Ha2/Ha1 | 1 | 1.1 | | | | 1 |
| • Ratio La2/Lal | 1 | 0.9 | | | | 1 |
| Braking performance | 100 | 120 | 112 | 117 | 117 | 120 |
| Steering stability performance | 100 | 120 | 120 | 120 | 120 | 110 |
| *1) The inner end portion of each shoulder lateral groove communicates with the shoulder main groove. *2) The inner end portion of each shoulder lateral groove terminates within the shoulder land portion without being connected to the shoulder main groove via a sipe. *3) The inner end portion of each shoulder lateral groove is connected to the shoulder main groove via a sipe. | | | | | | |

As a result of the tests, it can be confirmed that the tires of the examples can have enhanced braking performance.=

## Claims

1.  A tire (1) comprising a tread portion (2) divided, by a plurality of circumferential main grooves (4A, 4B, 5) including a pair of shoulder main grooves (4A, 4B), into a plurality of land portions (6A, 6B, 7A, 7B) including a pair of shoulder land portions (6A, 6B) at an outer side in a tire axial direction with respect to the respective shoulder main grooves (4A, 4B), wherein
    a first shoulder land portion (6A) that is one of the pair of shoulder land portions (6A, 6B) has:

    a plurality of first shoulder lateral grooves (10) each extending inward in the tire axial direction from the outer side in the tire axial direction with respect to a ground-contact edge (TA) and having an inner end portion (10e) that terminates within the first shoulder land portion (6A) without being connected to the shoulder main groove (4A) via a sipe; and
    first shoulder sipes (11) each provided between the first shoulder lateral grooves (10) that are adjacent to each other in a tire circumferential direction, **characterized in that**
    each first shoulder lateral groove (10) has a two-stage structure having a shallow groove portion (12) located at an inner side in the tire axial direction and a deep groove portion (14) that is located at the outer side in the tire axial direction and that is connected to the shallow groove portion (12) via a step portion (13),

    wherein the groove depth of the shallow groove portion (12) gradually increases from the inner end portion (10e) toward the outer side in the tire axial direction, and has a maximum depth (Ha1) at a point of intersection (Pa) of the shallow groove portion (12) and the step portion (13),
    wherein further the groove depth of the deep groove portion (14) gradually decreases from a point of intersection (Pc) of the deep groove portion (14) and the step portion (13) toward the outer side in the tire axial direction, and has a maximum depth (Hj 1) at the point of intersection (Pc), and
    wherein the maximum depth (Ha1) of the shallow groove portion (12) of the first shoulder lateral groove (10) is 55 to 65% of the maximum depth (Hj 1) of the deep groove portion (14) of the first shoulder lateral groove (10).

2.  The tire (1) according to claim 1, wherein the maximum depth (Ha1) of the shallow groove portion (12) of the first shoulder lateral groove (10) is substantially equal to a maximum depth (Hb1) of the first shoulder sipe (11).

3.  The tire (1) according to claim 1 or 2, wherein
    an inner end portion (11e) of each first shoulder sipe (11) terminates within the first shoulder land portion (6A), and
    a distance (La1) in the tire axial direction from the shoulder main groove (4A) to the inner end portion (10e) of the first shoulder lateral groove (10) is substantially equal to a distance (Lb1) in the tire axial direction from the shoulder main groove (4A) to the inner end portion (11e) of the first shoulder sipe (11).

4. The tire (1) according to any one of claims 1 to 3, wherein
how the tire (1) is to be oriented when mounted to a vehicle is specified,
when the tire (1) is mounted on the vehicle, the first shoulder land portion (6A) is located at an outer side of the vehicle, and a second shoulder land portion (6B) that is the other shoulder land portion (6B) is located at an inner side of the vehicle, and
the second shoulder land portion (6B) has:

   a plurality of second shoulder lateral grooves (20) each extending inward in the tire axial direction from the outer side in the tire axial direction with respect to a ground-contact edge (TB) and having an inner end portion (20e) connected to the shoulder main groove (4B) via a sipe (19); and
   second shoulder sipes (21) each provided between the second shoulder lateral grooves (20) that are adjacent to each other in the tire circumferential direction.

5. The tire (1) according to claim 4, wherein each second shoulder lateral groove (20) has a two-stage structure having a shallow groove portion (22) located at the inner side in the tire axial direction and a deep groove portion (24) that is located at the outer side in the tire axial direction and that is connected to the shallow groove portion (22) via a step portion (23).

6. The tire (1) according to claim 5, wherein a maximum depth (Ha2) of the shallow groove portion (22) of the second shoulder lateral groove (20) is substantially equal to a maximum depth (Hb2) of the second shoulder sipe (21).

7. The tire (1) according to any one of claims 4 to 6, wherein
an inner end portion (21e) of each second shoulder sipe (21) terminates within the second shoulder land portion (6B), and
a distance (La2) in the tire axial direction from the shoulder main groove (4B) to the inner end portion (20e) of the second shoulder lateral groove (20) is substantially equal to a distance (Lb2) in the tire axial direction from the shoulder main groove (4B) to the inner end portion (21e) of the second shoulder sipe (21).

8. The tire (1) according to claim 6 or 7, wherein a maximum depth (Ha2) of the shallow groove portion (22) of the second shoulder lateral groove (20) is larger than the maximum depth (Ha1) of the shallow groove portion (12) of the first shoulder lateral groove (10).

9. The tire (1) according to claim 7 or 8, wherein the distance (La2) in the tire axial direction from the shoulder main groove (4B) to the inner end portion (20e) of the second shoulder lateral groove (20) is smaller than the distance (La1) in the tire axial direction from the shoulder main groove (4A) to the inner end portion (10e) of the first shoulder lateral groove (10).

10. The tire (1) according to any one of claims 1 to 9, wherein
the plurality of land portions include a first middle land portion (7A) adjacent to the first shoulder land portion (6A) via the shoulder main groove (4A), and
the first middle land portion (7A) has outer middle sipes (30) each extending from an outer edge (Eo) in the tire axial direction of the first middle land portion (7A) and terminating within the first middle land portion (7A), and inner middle sipes (31) each extending from an inner edge (Ei) in the tire axial direction of the first middle land portion (7A) and terminating within the first middle land portion (7A).

11. The tire (1) according to claim 10, wherein
a maximum depth (Hc1) of each outer middle sipe (30) is smaller than the maximum depth (Ha1) of the shallow groove portion (12) of the first shoulder lateral groove (10), and
a maximum depth (Hd1) of each inner middle sipe (31) is larger than the maximum depth (Ha1) of the shallow groove portion (12) of the first shoulder lateral groove (10).

**Patentansprüche**

1. Reifen (1), der einen Laufflächenabschnitt (2) umfasst, der durch eine Vielzahl von Umfangshauptrillen (4A, 4B, 5), die ein Paar Schulterhauptrillen (4A, 4B) einschließen, in eine Vielzahl von Landabschnitten (6A, 6B, 7A, 7B), die ein Paar Schulterlandabschnitte (6A, 6B) einschließen, an einer Außenseite in einer axialen Richtung des Reifens in Bezug auf die jeweiligen Schulterhauptrillen (4A, 4B) unterteilt ist, wobei

ein erster Schulterlandabschnitt (6A), der einer des Paares Schulterlandabschnitte (6A, 6B) ist, aufweist:

eine Vielzahl von ersten Schulterquerrillen (10), die sich jeweils in der axialen Richtung des Reifens von der Außenseite in der axialen Richtung des Reifens in Bezug auf eine Bodenkontaktkante (TA) nach innen erstrecken und einen inneren Endabschnitt (10e) aufweisen, der innerhalb des ersten Schulterlandabschnitts (6A) endet, ohne dass er über einen Feinschnitt mit der Schulterhauptrille (4A) verbunden ist; und

erste Schulterfeinschnitte (11), die jeweils zwischen den ersten Schulterquerrillen (10) vorgesehen sind, die in einer Reifenumfangsrichtung benachbart sind,

**dadurch gekennzeichnet, dass**

jede erste Schulterquerrille (10) einen zweistufigen Aufbau mit einem flachen Rillenabschnitt (12), der an einer Innenseite in der axialen Richtung des Reifens angeordnet ist, und einem tiefen Rillenabschnitt (14) aufweist, der an der Außenseite in der axialen Richtung des Reifens angeordnet ist und der mit dem flachen Rillenabschnitt (12) über einen Stufenabschnitt (13) verbunden ist,

wobei die Rillentiefe des flachen Rillenabschnitts (12) vom inneren Endabschnitt (10e) in Richtung zu der Außenseite in der axialen Richtung des Reifens allmählich zunimmt und eine maximale Tiefe (Ha1) an einem Schnittpunkt (Pa) des flachen Rillenabschnitts (12) und des Stufenabschnitts (13) aufweist,

wobei ferner die Rillentiefe des tiefen Rillenabschnitts (14) von einem Schnittpunkt (Pc) des tiefen Rillenabschnitts (14) und des Stufenabschnitts (13) in Richtung der Außenseite in der axialen Richtung des Reifens allmählich abnimmt und eine maximale Tiefe (Hj1) am Schnittpunkt (Pc) aufweist, und

wobei die maximale Tiefe (Ha1) des flachen Rillenabschnitts (12) der ersten Schulterquerrille (10) 55 bis 65% der maximalen Tiefe (Hj1) des tiefen Rillenabschnitts (14) der ersten Schulterquerrille (10) beträgt.

2. Reifen (1) nach Anspruch 1, wobei die maximale Tiefe (Ha1) des flachen Rillenabschnitts (12) der ersten Schulterquerrille (10) im Wesentlichen gleich einer maximalen Tiefe (Hb1) des ersten Schulterfeinschnitts (11) ist.

3. Reifen (1) nach Anspruch 1 oder 2, wobei

ein innerer Endabschnitt (11e) jedes ersten Schulterfeinschnitts (11) innerhalb des ersten Schulterlandabschnitts (6A) endet, und

ein Abstand (La1) in der axialen Richtung des Reifens von der Schulterhauptrille (4A) zu dem inneren Endabschnitt (10e) der ersten Schulterquerrille (10) im Wesentlichen gleich einem Abstand (Lb1) in der axialen Richtung des Reifens von der Schulterhauptrille (4A) zu dem inneren Endabschnitt (11e) des ersten Schulterfeinschnitts (11) ist.

4. Reifen (1) nach einem der Ansprüche 1 bis 3, wobei

spezifiziert ist, wie der Reifen (1) bei der Montage an einem Fahrzeug auszurichten ist,

wenn der Reifen (1) an dem Fahrzeug montiert ist, der erste Schulterlandabschnitt (6A) sich an einer Außenseite des Fahrzeugs befindet und ein zweiter Schulterlandabschnitt (6B), der der andere Schulterlandabschnitt (6B) ist, sich an einer Innenseite des Fahrzeugs befindet, und

der zweite Schulterlandabschnitt (6B) aufweist:

eine Vielzahl von zweiten Schulterquerrillen (20), die sich jeweils in der axialen Richtung des Reifens von der Außenseite in der axialen Richtung des Reifens in Bezug auf eine Bodenkontaktkante (TB) nach innen erstrecken und einen inneren Endabschnitt (20e) aufweisen, der über einen Feinschnitt (19) mit der Schulterhauptrille (4B) verbunden ist; und

zweite Schulterfeinschnitte (21), die jeweils zwischen den zweiten Schulterquerrillen (20) vorgesehen sind, die in der Reifenumfangsrichtung benachbart sind.

5. Reifen (1) nach Anspruch 4, wobei jede zweite Schulterquerrille (20) einen zweistufigen Aufbau mit einem flachen Rillenabschnitt (22), der an der Innenseite in der axialen Richtung des Reifens angeordnet ist, und einem tiefen Rillenabschnitt (24) aufweist, der an der Außenseite in der axialen Richtung des Reifens angeordnet ist und der über einen Stufenabschnitt (23) mit dem flachen Rillenabschnitt (22) verbunden ist.

6. Reifen (1) nach Anspruch 5, wobei eine maximale Tiefe (Ha2) des flachen Rillenabschnitts (22) der zweiten Schulterquerrille (20) im Wesentlichen gleich einer maximalen Tiefe (Hb2) des zweiten Schulterfeinschnitts (21) ist.

7. Reifen (1) nach einem der Ansprüche 4 bis 6, wobei ein innerer Endabschnitt (21e) jedes zweiten Schulterfeinschnitts (21) innerhalb des zweiten Schulterlandabschnitts (6B) endet, und

ein Abstand (La2) in der axialen Richtung des Reifens von der Schulterhauptrille (4B) zu dem inneren Endabschnitt (20e) der zweiten Schulterquerrille (20) im Wesentlichen gleich einem Abstand (Lb2) in der axialen Richtung des Reifens von der Schulterhauptrille (4B) zu dem inneren Endabschnitt (21e) des zweiten Schulterfeinschnitts (21) ist.

**8.** Reifen (1) nach Anspruch 6 oder 7, wobei eine maximale Tiefe (Ha2) des flachen Rillenabschnitts (22) der zweiten Schulterquerrille (20) größer ist als die maximale Tiefe (Ha1) des flachen Rillenabschnitts (12) der ersten Schulterquerrille (10).

**9.** Reifen (1) nach Anspruch 7 oder 8, wobei der Abstand (La2) in der axialen Richtung des Reifens von der Schulterhauptrille (4B) zu dem inneren Endabschnitt (20e) der zweiten Schulterquerrille (20) kleiner ist als der Abstand (La1) in der axialen Richtung des Reifens von der Schulterhauptrille (4A) zu dem inneren Endabschnitt (10e) der ersten Schulterquerrille (10).

**10.** Reifen (1) nach einem der Ansprüche 1 bis 9, wobei

die Mehrzahl von Landabschnitten einen ersten mittleren Landabschnitt (7A) aufweist, der über die Schulterhauptrille (4A) benachbart zu dem ersten Schulterlandabschnitt (6A) ist, und

der erste mittlere Landabschnitt (7A) äußere mittlere Feinschnitte (30), die sich jeweils von einer Außenkante (Eo) in der axialen Richtung des ersten mittleren Landabschnitts (7A) des Reifens erstrecken und innerhalb des ersten mittleren Landabschnitts (7A) enden, und innere mittlere Feinschnitte (31) aufweist, die sich jeweils von einer Innenkante (Ei) in der axialen Richtung des Reifens des ersten mittleren Landabschnitts (7A) erstrecken und innerhalb des ersten mittleren Landabschnitts (7A) enden.

**11.** Reifen (1) nach Anspruch 10, wobei

eine maximale Tiefe (Hc1) jedes äußeren mittleren Feinschnitts (30) kleiner als ist die maximale Tiefe (Ha1) des flachen Rillenabschnitts (12) der ersten Schulterquerrille (10), und

eine maximale Tiefe (Hd1) jedes inneren mittleren Feinschnitts (31) größer ist als die maximale Tiefe (Ha1) des flachen Rillenabschnitts (12) der ersten Schulterquerrille (10).

**Revendications**

**1.** Pneumatique (1) comprenant une portion formant bande de roulement (2) divisée, par une pluralité de rainures principales circonférentielles (4A, 4B, 5) incluant une paire de rainures principales d'épaulement (4A, 4B), en une pluralité de portions en relief (6A, 6B, 7A, 7B) incluant une paire de portions en relief d'épaulement (6A, 6B) au niveau d'un côté extérieur dans une direction axiale du pneumatique par rapport aux rainures principales d'épaulement respectives (4A, 4B), dans lequel

une première portion en relief d'épaulement (6A) qui est l'une de la paire de portions en relief d'épaulement (6A, 6B) a :

une pluralité de premières rainures latérales d'épaulement (10) s'étendant chacune vers l'intérieur dans la direction axiale du pneumatique depuis le côté extérieur dans la direction axiale du pneumatique par rapport à un bord de contact au sol (TA) et ayant une portion d'extrémité intérieure (10e) qui se termine à l'intérieur de la première portion en relief d'épaulement (6A) sans être connectée à la rainure principale d'épaulement (4A) via une fente ; et

des premières fentes d'épaulement (11) prévues chacune entre les premières rainures latérales d'épaulement (10) qui sont adjacentes les unes aux autres dans une direction circonférentielle du pneumatique,

**caractérisé en ce que**

chaque première rainure latérale d'épaulement (10) a une structure à deux étages ayant une portion de rainure peu profonde (12) située au niveau d'un côté intérieur dans la direction axiale du pneumatique et une portion de rainure profonde (14) qui est située au niveau de l'autre côté dans la direction axiale du pneumatique et qui est connectée à la portion de rainure peu profonde (12) via une portion de gradin (13),

dans lequel la profondeur de la portion de rainure peu profonde (12) augmente progressivement depuis la portion d'extrémité intérieure (10e) vers le côté extérieur dans la direction axiale du pneumatique, et a une profondeur maximum (Ha1) au niveau d'un point d'intersection (Pa) de la portion de rainure peu profonde (12) et de la portion de gradin (13),

dans lequel en outre la profondeur de la portion de rainure profonde (14) diminue progressivement depuis un point d'intersection (Pc) de la portion de rainure profonde (14) et de la portion de gradin (13) vers le côté extérieur dans la direction axiale du pneumatique, et a une profondeur maximum (Hj1) au niveau du point d'intersection (Pc), et

dans lequel la profondeur maximum (Ha1) de la portion de rainure peu profonde (12) de la première rainure latérale d'épaulement (10) est de 55 à 65 % de la profondeur maximum (Hj1) de la portion de rainure profonde (14) de la première rainure latérale d'épaulement (10).

2. Pneumatique (1) selon la revendication 1, dans lequel la profondeur maximum (Ha) de la portion de rainure peu profonde (12) de la première rainure latérale d'épaulement (10) est sensiblement égale à une profondeur maximum (Hb1) de la première fente d'épaulement (11).

3. Pneumatique (1) selon la revendication 1 ou 2, dans lequel une portion d'extrémité intérieure (11e) de chaque première fente d'épaulement (11) se termine à l'intérieur de la première portion en relief d'épaulement (6A), et une distance (L a1) dans la direction axiale du pneumatique depuis la rainure principale d'épaulement (4A) jusqu'à la portion d'extrémité intérieure (10e) de la première rainure latérale d'épaulement (10) est sensiblement égale à une distance (Lb)1) dans la direction axiale du pneumatique depuis la rainure principale d'épaulement (4A) jusqu'à la portion d'extrémité intérieure (11e) de la première fente d'épaulement (11).

4. Pneumatique (1) selon l'une quelconque des revendications 1 à 3, dans lequel
   la manière selon laquelle le pneumatique (1) doit être orienté lorsqu'il est monté sur un véhicule est spécifiée, quand le pneumatique (1) est monté sur le véhicule, la première portion en relief d'épaulement (6A) est située au niveau d'un côté extérieur du véhicule, et une seconde portion en relief d'épaulement (6B) qui est l'autre portion en relief d'épaulement (6B) est située au niveau d'un côté intérieur du véhicule, et
   la seconde portion en relief d'épaulement (6B) a :

   une pluralité de secondes rainures latérales d'épaulement (20) s'étendant chacune vers l'intérieur dans la direction axiale du pneumatique depuis le côté extérieur dans la direction axiale du pneumatique par rapport à un bord de contact au sol (TB) et ayant une portion d'extrémité intérieure (20e) connectée à la rainure principale d'épaulement (4B) via une fente (19) ; et
   des secondes fentes d'épaulement (21) prévues chacune entre les secondes rainures latérales d'épaulement (20) qui sont adjacentes les unes aux autres dans la direction circonférentielle du pneumatique.

5. Pneumatique (1) selon la revendication 4, dans lequel chaque seconde rainure latérale d'épaulement (20) a une structure à deux étages ayant une portion de rainure peu profonde (22) située au niveau du côté intérieur dans la direction axiale du pneumatique et une portion de rainure profonde (24) qui est située au niveau du côté extérieur dans la direction axiale du pneumatique et qui est connectée à la portion de rainure peu profonde (22) via une portion de gradin (23).

6. Pneumatique (1) selon la revendication 5, dans lequel une profondeur maximum (Ha2) de la portion de rainure peu profonde (22) de la seconde rainure latérale d'épaulement (20) est sensiblement égale à une profondeur maximum (Hb2) de la seconde fente d'épaulement (21).

7. Pneumatique (1) selon l'une quelconque des revendications 4 à 6, dans lequel
   une portion d'extrémité intérieure (21e) de chaque seconde fente d'épaulement (21) se termine à l'intérieur de la seconde portion en relief d'épaulement (6B), et
   une distance (La2) dans la direction axiale du pneumatique depuis la rainure principale d'épaulement (4B) jusqu'à la portion d'extrémité intérieure (20e) de la seconde rainure latérale d'épaulement (20) est sensiblement égale à une distance (Lb2) dans la direction axiale du pneumatique depuis la rainure principale d'épaulement (4B) jusqu'à la portion d'extrémité intérieure (21e) de la seconde fente d'épaulement (21).

8. Pneumatique (1) selon la revendication 6 ou 7, dans lequel une profondeur maximum (Ha2) de la portion de rainure peu profonde (22) de la seconde rainure latérale d'épaulement (20) est plus grande que la profondeur maximum (Ha1) de la portion de rainure peu profonde (12) de la première rainure latérale d'épaulement (10).

9. Pneumatique (1) selon la revendication 7 ou 8, dans lequel la distance (La2) dans la direction axiale du pneumatique depuis la rainure principale d'épaulement (4B) jusqu'à la portion d'extrémité intérieure (20e) de la seconde rainure latérale d'épaulement (20) est plus petite que la distance (La1) dans la direction axiale du pneumatique depuis la rainure principale d'épaulement (4A) jusqu'à la portion d'extrémité intérieure (10e) de la première rainure latérale d'épaulement (10).

**10.** Pneumatique (1) selon l'une quelconque des revendications 1 à 9, dans lequel
la pluralité de portions en relief incluent une première portion en relief médiane (7A) adjacente à la première portion en relief d'épaulement (6A) via la rainure principale d'épaulement (4A), et
la première portion en relief médiane (7A) a des fentes médianes extérieures (30) s'étendant chacune depuis un bord extérieur (Eo) dans la direction axiale du pneumatique de la première portion en relief médiane (7A) et se terminant à l'intérieur de la première portion en relief médiane (7A), et des fentes médianes intérieures (31) s'étendant chacune depuis un bord intérieur (Ei) dans la direction axiale du pneumatique de la première portion en relief médiane (7A) et se terminant à l'intérieur de la première portion en relief médiane (7A).

**11.** Pneumatique (1) selon la revendication 10, dans lequel
une profondeur maximum (Hc1) de chaque fente médiane extérieure (30) est plus petite que la profondeur maximum (Ha1) de la portion de rainure peu profonde (12) de la première rainure latérale d'épaulement (10), et
une profondeur maximum (Hd1) de chaque fente médiane intérieure (31) est plus grande que la profondeur maximum (Ha1) de la portion de rainure peu profonde (12) de la première rainure latérale d'épaulement (10).

**Fig. 1**

**(A)**

**(B)**

Fig. 2

(A)

(B)

Fig. 3

(A)

(B)

Fig. 4

Fig. 5

Fig. 6

Fig. 7

**EP 3 611 039 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017071373 A

- JP 2017056814 A